# EUROPEAN PATENT SPECIFICATION

(11) **EP 3 192 355 B1**
(45) Date of publication and mention of the grant of the patent: **17.09.2025**
(21) Application number: 17150979.7
(22) Date of filing: 11.01.2017
(51) Int. Cl.: A01G 23/083

(54) **CUTTING DEVICE IN A HARVESTER HEAD OF A WOOD HARVESTING MACHINE**
SCHNEIDVORRICHTUNG IN EINEM ERNTEVORSATZ EINER HOLZERNTEMASCHINE
DISPOSITIF DE DÉCOUPE DANS UNE TÊTE D'ABATTAGE-ÉBRANCHAGE D'UNE ABATTEUSE-FAÇONNEUSE

(30) Priority: 15.01.2016 FI 20160006 U
(43) Date of publication of application: 19.07.2017
(73) Proprietor: Nisula, Ali, 35600 Halli (FI)
(72) Inventor: Nisula, Ali, 35600 Halli (FI)
(74) Representative: Kolster Oy Ab

(56) References cited:
- US-A- 3 252 487
- US-A- 3 532 141
- US-A- 3 886 984

## Description

The invention relates to a cutting device in a harvester head of a wood harvesting machine, which harvester head is to be positioned at the end of a movable boom of the wood harvesting machine, and the harvester head comprises a frame to which are attached at least one wood cutting device, grapples for gripping a tree, and delimbing blades to delimb the tree.

Finnish patent publication FI 121054 B1 discloses a cutting device positioned at a harvester head for cutting a tree, whereby the harvester head comprises a frame to which at least one chain saw and several delimbing blades are attached. In this solution, the cutting device consists of at least one blade frame and a detachable blade attached to it, and there is at least one detachable counterblade attached to the frame.

In the solution described above, the cutting blade used for cutting a tree or trees must be moved all the way to the counterblade until the trees are cut, for example when a bundle of small trees is cut at a time. Such a bundle must be cut with a single movement, which requires high compressive force. A cutting device that is in the open position can easily scrape adjacent trees that are not to be harvested, when the harvester head is moved to the base of the trees to be harvested next. In addition, in the solution of the model described in FI 121054 B1, the cutting blade is in the open position, when the device is moved to the base of a tree to be harvested and during the delimbing phase. The cutting blade is extremely vulnerable to damage in such situations.

US-publication 3532141 discloses another cutting device in a harvester head as disclosed above.

A new cutting device in the harvester head has therefore been developed to solve the known drawbacks and disadvantages. The cutting device according to the invention is disclosed in claim 1 and corresponding claim 6.

Other preferred embodiments of the invention are disclosed in the dependent claims.

An advantage of the cutting blade according to the invention is that when the cutting device is located on the frame of the delimbing blade supporting on the tree, the cutting device is always in a preferred position in relation to the tree to be cut, whereby the cutting blade does not have to move a long way before the cutting action, which makes the cutting action more efficient.

In addition, the structure of the solution allows the cutting blade to be positioned in such a manner that it is completely protected against damage. The use of a cutting blade does not burden the pivot mounting of the delimbing blade, nor is the cutting force directed at the frame of the actual harvester head, as the cylinder of the cutting device is mounted to the frame of the delimbing blade instead of the frame of the harvester head.

The cutting blade can be used for cutting individual trees to get them out of the way without actually gripping them by the harvester head or, alternatively, for cutting and delimbing them. Furthermore, several individual small stems can be gripped to be compressed as a bundle by the delimbing blades of the harvester head, as the cutting blade can be returned to its initial position to perform a new cutting action, while the delimbing blades compress the bundle to a smaller size.

The cutting device positioning according to the invention can also be used at the front delimbing blade of more heavy-duty harvester heads, whereby the solution can replace a sawing device which is positioned at the front end of a grapple and which is known from and often used in such harvesters. The cutting device requires less space than a saw, and its structure is far more advantageous.

In the following, the invention will be described with reference to the attached drawings, in which
Figure 1 shows the position of a cutting blade on the frame of a delimbing blade of a harvester head, when a cutting action has been performed and the delimbing blade is open.
Figures 2 to 4 show the structure of Figure 1 from different directions.
Figure 5 shows the cutting blade during one of the tree cutting phases, whereby the delimbing blade is open.
Figure 6 shows the cutting blade in a retracted position, whereby the delimbing blade is open.
Figure 7 shows the cutting blade after a cutting action has been performed, whereby the delimbing blade is closed.
Figure 8 shows the cutting blade during a cutting phase, whereby the delimbing blade is closed.
Figure 9 shows the cutting blade in a retracted position, whereby the delimbing blade is closed.
Figure 10 is a diagonal side view of the structure of Figures 7 to 9.

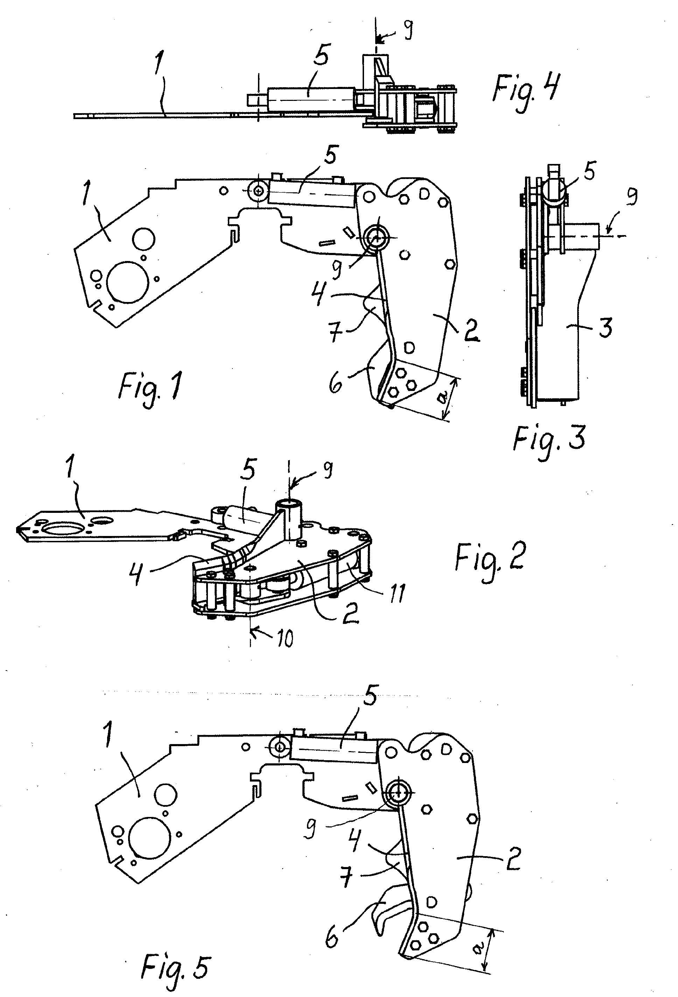

Figures 1, 3 and 4 illustrate the structure of the lower end of a harvester head intended for harvesting energy wood, whereby the frame 1 is the frame of the lower part of the harvester head, in this case a plate, to which you can attach a chain saw, for example, on its back or lower surface, and other components, such as a frame directed towards to front part, on its front or upper surface. The frame 2 of a delimbing blade 4 or of a pruning blade 4, which frame can be moved by means of a hydraulic cylinder 5 and which turns round the joint 9, is attached to the frame 1 by pivot mounting. The frame 2 of the delimbing blade 4 is here turned open to the position where the harvester head is moved to the base of a tree for cutting. A hydraulic cylinder 11 for moving the cutting blade 6 of the cutting device according to the invention is provided within the casing of the delimbing blade frame 2. In Figure 1, the cutting blade 6 is in the closed or final cutting position. The counterpart of the cutting blade 6 is either the frame 2 of the delimbing blade or a flange part 3 of the delimbing blade 4. The delimbing blade 4 and its flange part 3 are curved. The curved section is the section at the outer edge of the delimbing blade 4 that substantially participates in the delimbing. During cutting, the counterpart of the tree 8 is section a of the curved sharpened part. During cutting, a substantially 50% section of the curved sharpened part serves as the counterpart. Figure 1 also shows a projection 7 of the frame 2 of the delimbing blade 4, which projection steers the tree during the delimbing.

Figure 2 also shows a mounting joint 10 of the cutting blade 6. The mounting joint is positioned on the frame 2 of the delimbing blade 4, and it is on this joint that the cutting blade 6 performs the cutting motion by means of the hydraulic cylinder 11. Both fastening points of the hydraulic cylinder 11 are located on the frame 2, whereby the force generated by the cylinder 11 remains in the frame 2 and does not burden the mounting joint 9 of the frame 2, for example.

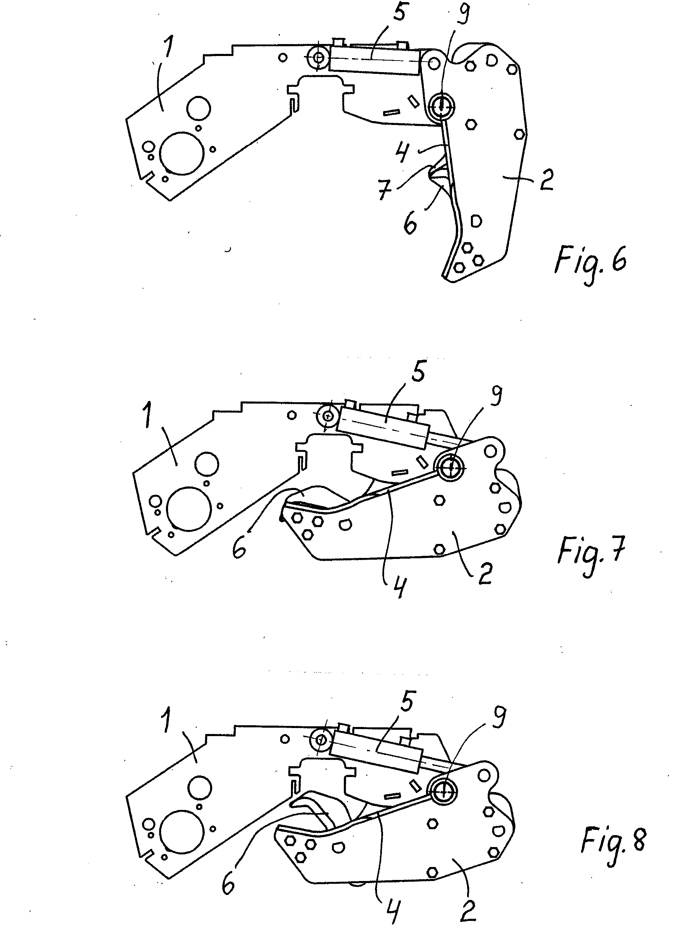

Figure 5 illustrates the structure of the lower end in accordance with Figure 1, where the cutting blade 6 is in an intermediate position, for instance returning to its position under the projection 7, as illustrated in Figure 6.

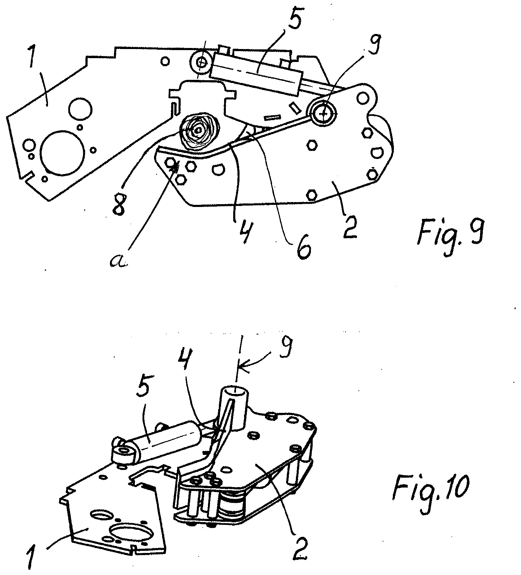

In Figures 7,8 and 9, the frame 2 of the delimbing blade 4 has been turned by means of the hydraulic cylinder 5 to a closed position. The closed position depends on the diameter of the tree 8 held by the harvester head. If the diameter of the tree 8 to be harvested is too large for the cutting device, the cutting device will not be used, but the cutting will be performed by means of another cutting device, such as a chain saw, fitted on the harvester head. After the cutting, the cutting blade 6 can return freely to its initial position. This allows the harvester head to take more trees to be cut by the cutting blade 6 and to adjust the resulting bundle of trees by means of the grapples belonging to the harvester head and also by means of the movable delimbing blades. The harvester head also includes pincher rolls known per se (not illustrated), by means of which a tree 8 or a bundle of trees is moved through the harvester head for delimbing it before the next cutting action.

The delimbing blade on which the cutting device is positioned may at the same time function as a movable grapple. One or more of the delimbing blades is often fixedly mounted to the frame and is thus non-movable. Such a delimbing blade can also be provided with a cutting device according to the invention. Furthermore, if the cutting device is positioned at the front or upper part of the harvester head, it can be used for cutting treetops, as they have small diameters.

## Claims

1. A cutting device in a harvester head of a wood harvesting machine, which harvester head is to be positioned at the end of a movable boom of the wood harvesting machine, and the harvester head comprises a frame (1) to which are attached at least one wood cutting device, grapples for gripping a tree, and delimbing blades (4) to delimb the tree, **characterised in that** a delimbing blade frame (2) of the delimbing blades (4), which delimbing blade frame (2) is moved by means of a hydraulic cylinder (5) and which turns round a joint (9), is attached to the frame (1) by pivot mounting, the cutting device provided with a cutting blade (6) is attached to the delimbing blade frame (2) of one of the delimbing blades (4), whereby a counterpart of said cutting blade (6) is said delimbing blade (4) and/or its delimbing blade frame (2), a mounting joint (10) of the cutting blade (6) is positioned on the delimbing blade frame (2), and **in that** the delimbing blade frame (2) and the cutting blade (6) attached to it are movable round their own mounting joint points (9), (10).

2. A cutting device as claimed in claim **1, characterised in that** it is positioned on a delimbing blade (4) that is either movable or fixedly mounted to the delimbing blade frame (2) and to the lower or back, in the direction of travel of the tree, surface of the delimbing blade.

3. A cutting device as claimed in claim 1, **characterised in that** the cutting blade (6) is arranged to move in a space which is adjacent to the delimbing blade (4) and in which a tree (8) is placed.

4. A cutting device as claimed in claim 1, **characterised in that** the delimbing blade (4) comprises a curved part, whereby the counterpart of the cutting blade (6) is a section (a) of said curved part, which forms 50% of said curved part.

5. A cutting device as claimed in claim 1, **characterised in that** the cutting blade (6) performs a cutting motion by means of a hydraulic cylinder (11), wherein fastening points of the hydraulic cylinder (11) are located on the delimbing blade frame (2) and the cutting blade (6).

6. A harvester head comprising:
a frame (1);
grapples for gripping a tree, the grapples attached to the frame (1);
delimbing blades (4) to delimb the tree;
a delimbing blade frame (2) of the delimbing blades (4), which delimbing blade frame (2) is moved by means of a hydraulic cylinder (5) and which turns round a joint (9), being attached to the frame (1) by pivot mounting; and
the cutting device of any preceding claim 1-5.

## Patentansprüche

1. Schneidvorrichtung in einem Schneidvorsatz einer Holzerntemaschine, wobei der Schneidvorsatz an dem Ende eines beweglichen Auslegers der Holzerntemaschine zu positionieren ist und der Schneidvorsatz einen Rahmen (1), an dem mindestens eine Holzschneidvorrichtung angebracht ist, Greifer zum Greifen eines Baums und Entastungsmesser (4) zum Entasten des Baumes umfasst, **dadurch gekennzeichnet, dass** ein Entastungsmesserrahmen (2) der Entastungsmesser (4), wobei der Entastungsmesserrahmen (2) mittels eines Hydraulikzylinders (5) bewegt wird und sich um ein Gelenk (9) dreht, mittels schwenkbaren Montierens an dem Rahmen (1) angebracht ist, wobei die Schneidvorrichtung, die mit einem Schneidmesser (6) versehen ist, an dem Entastungsmesserrahmen (2) eines der Entastungsmesser (4) angebracht ist, wodurch ein Gegenstück des Schneidmessers (6) das Entastungsmesser (4) und/oder sein Entastungsmesserrahmen (2) ist, ein Montagegelenk (10) des Schneidmessers (6) an dem Entastungsmesserrahmen (2) positioniert ist, und dadurch, dass der Entastungsmesserrahmen (2) und das daran angebrachte Schneidmesser (6) um ihre eigenen Montagegelenkpunkte (9), (10) herum beweglich sind.

2. Schneidvorrichtung nach Anspruch 1, **dadurch gekennzeichnet, dass** sie an einem Entastungsmesser (4) positioniert ist, das entweder beweglich oder fest an dem Entastungsmesserrahmen (2) und, in der Bewegungsrichtung des Baums, an der unteren oder hinteren Oberfläche des Entastungsmessers montiert ist.

3. Schneidvorrichtung nach Anspruch 1, **dadurch gekennzeichnet, dass** das Schneidmesser (6) eingerichtet ist, um sich in einem Raum zu bewegen, der dem Entastungsmesser (4) benachbart ist und in dem ein Baum (8) platziert ist.

4. Schneidvorrichtung nach Anspruch 1, **dadurch gekennzeichnet, dass** das Entastungsmesser (4) einen gekrümmten Teil umfasst, wodurch das Gegenstück des Schneidmessers (6) ein Abschnitt (a) des gekrümmten Teils ist, der 50 % des gekrümmten Teils bildet.

5. Schneidvorrichtung nach Anspruch 1, **dadurch gekennzeichnet, dass** das Schneidmesser (6) eine Schneidbewegung mittels eines Hydraulikzylinders (11) durchführt, wobei Befestigungspunkte des Hydraulikzylinders (11) sich auf dem Entastungsmesserrahmen (2) und dem Schneidmesser (6) befinden.

6. Erntevorsatz, umfassend:
einen Rahmen (1);
Greifer zum Greifen eines Baumes, wobei die Greifer an dem Rahmen (1) angebracht sind;
Entastungsmesser (4) zum Entasten des Baums;
einen Entastungsmesserrahmen (2) der Entastungsmesser (4), wobei der Entastungsmesserrahmen (2) mittels eines Hydraulikzylinders (5) bewegt wird und sich um ein Gelenk (9) dreht, das mittels schwenkbaren Montierens an dem Rahmen (1) angebracht ist; und
die Schneidvorrichtung nach einem der vorhergehenden Ansprüche 1 bis 5.

## Revendications

1. Dispositif de coupe dans une tête d'abattage-ébranchage d'une abatteuse-façonneuse, laquelle tête d'abattage-ébranchage doit être positionnée à l'extrémité d'une flèche mobile de l'abatteuse-façonneuse, et la tête d'abattage-ébranchage comprend un bâti (1) sur lequel sont fixés au moins un dispositif de coupe de bois, des grappins pour saisir un arbre, et des lames d'ébranchage (4) pour ébrancher l'arbre, **caractérisé en ce qu'**un bâti de lame d'ébranchage (2) des lames d'ébranchage (4), lequel bâti de lame d'ébranchage (2) est déplacé au moyen d'un vérin hydraulique (5) et qui tourne autour d'une articulation (9), est fixé au bâti (1) par montage de pivot, le dispositif de coupe prévu avec une lame de coupe (6) est fixé au bâti de lame d'ébranchage (2) de l'une des lames d'ébranchage (4), moyennant quoi une contrepartie de ladite lame de coupe (6) est ladite lame d'ébranchage (4) et/ou son bâti de lame d'ébranchage (2), une articulation de montage (10) de la lame de coupe (6) est positionnée sur le bâti de lame d'ébranchage (2) et **en ce que** le bâti de lame d'ébranchage (2) et la lame de coupe (6) fixée à ce dernier sont mobiles autour de leurs propres points d'articulation de montage (9), (10).

2. Dispositif de coupe selon la revendication 1, **caractérisé en ce qu'**il est positionné sur une lame d'ébranchage (4) qui est montée de manière mobile ou fixe sur le bâti de lame d'ébranchage (2) et sur la surface inférieure ou arrière, dans la direction de déplacement de l'arbre, de la lame d'ébranchage.

3. Dispositif de coupe selon la revendication 1, **caractérisé en ce que** la lame de coupe (6) est agencée pour se déplacer dans un espace qui est adjacent à la lame d'ébranchage (4) et dans lequel est placé un arbre (8).

4. Dispositif de coupe selon la revendication 1, **caractérisé en ce que** la lame d'ébranchage (4) comprend une partie courbée, moyennant quoi la contrepartie de la lame de coupe (6) est une section (a) de ladite partie courbée, qui forme 50% de ladite partie courbée.

5. Dispositif de coupe selon la revendication 1, **caractérisé en ce que** la lame de coupe (6) réalise un mouvement de coupe au moyen d'un vérin hydraulique (11), dans lequel des points de fixation du vérin hydraulique (11) sont positionnés sur le bâti de lame d'ébranchage (2) et la lame de coupe (6).

6. Tête d'abattage-ébranchage comprenant :
un bâti (1) ;
des grappins pour saisir un arbre, les grappins étant fixés au bâti (1) ;
des lames d'ébranchage (4) pour ébrancher l'arbre ;
un bâti de lame d'ébranchage (2) des lames d'ébranchage (4), lequel bâti de lame d'ébranchage (2) est déplacé au moyen d'un vérin hydraulique (5) et qui tourne autour d'une articulation (9), étant fixé au bâti (1) par montage par pivot ; et
le dispositif de coupe selon l'une quelconque des revendications 1 à 5.
